## Europäisches Patentamt
## European Patent Office
## Office européen des brevets

(19)

(11) Veröffentlichungsnummer: **0 191 142**
**B1**

(12) **EUROPÄISCHE PATENTSCHRIFT**

(45) Veröffentlichungstag der Patentschrift:
**10.08.88**

(21) Anmeldenummer: **85114187.9**

(22) Anmeldetag: **07.11.85**

(51) Int. Cl.⁴: **H 02 B 1/06,** B 66 B 1/46

(54) **Tableau für Aufzüge.**

(30) Priorität: **06.02.85 CH 540/85**

(43) Veröffentlichungstag der Anmeldung:
**20.08.86 Patentblatt 86/34**

(45) Bekanntmachung des Hinweises auf die Patenterteilung:
**10.08.88 Patentblatt 88/32**

(84) Benannte Vertragsstaaten:
**AT CH DE FR GB IT LI**

(56) Entgegenhaltungen:
**US-A-3 590 331**
**US-A-4 134 107**

(73) Patentinhaber: **INVENTIO AG, Seestrasse 55, CH-6052 Hergiswil NW (CH)**

(72) Erfinder: **Arato, Laszlo, Dipl.- Ing.,
Seebuchtstrasse 19, CH- 6374 Buochs (CH)**
Erfinder: **Borter, Ephraim, Ing. HTL,
Fluhmattstrasse 6, CH- 6033 Buchrain (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Tableau für Aufzüge, mit einem Gehäuse, in welchem Schalter und Anzeigelampen für die Eingabe von Steuerbefehlen bzw. für die Anzeige gespeicherter Steuerbefehle angeordnet sind, wobei Befestigungselemente für die Befestigung des Tableaus in einer Aufzugskabine oder auf einem Stockwerk vorgesehen sind.

Bei einem solchen, mit der US-PS-4 134 107 bekannt gewordenen Tableau, ist eine die Bedienungs- und Anzeigeelemente tragende Frontplatte mittels Schrauben an einer Wand der Aufzugskabine bzw. am Rahmen der Stockwerktür befestigt. Die Schraubenköpfe sind hierbei sichtbar und jedermann zugänglich angeordnet, so dass unbefugte Personen das Tableau in zerstörerischer Absicht mit Leichtigkeit entfernen können. Ein weiterer Nachteil ist darin zu sehen, dass diese Art der Befestigung nicht den Anforderungen modernen Designs genügt.

Der Erfindung liegt die Aufgabe zugrunde, ein Tableau der eingangs genannten Art zu schaffen, bei welchem die Befestigungselemente nicht sichtbar und unbefugten Personen unzugänglich angeordnet sind, wobei jedoch der Zugang zur Befestigung von der Frontseite des Tableaus durch ermächtigtes Personal gewährleistet ist.

Diese Aufgabe wird durch die im Patentanspruch 1 gekennzeichnete Erfindung gelöst. Hierbei werden die Befestigungselemente mittels Verschlussplatten verdeckt, die mit dem Gehäuse des Tableaus verriegelbar sind. Die Verschlussplatten sind dabei derart am Gehäuse angeordnet, dass sie mit frontseitigen Flanschen des Gehäuses bündig sind. Beim Entfernen der Verschlussplatten muss die Verriegelung mittels eines Schlüssels gelöst werden, der in getarnt an den Verschlussplatten angeordneten Schlüsselöffnungen eingeführt wird.

Die mit der Erfindung erzielten Vorteile sind darin zu sehen, dass unbefugten Personen der Zugriff zur Tableaubefestigung beträchtlich erschwert wird, da Spezialschlüssel, wenn auch einfachster Art, benötigt werden und die Schlüsselöffnungen nicht ohne weiteres als solche erkennbar sind. Ein weiterer, hinsichtlich des Designs erzielter Vorteil liegt darin, dass die Schraubenköpfe der Tableaubefestigung nicht sichtbar sind und die Verschlussplatte in die Frontseite des Tableaus integriert ist, wobei, wie beispielsweise vorgeschlagen, die siebartig angeordneten Löcher als Schallaustrittsöffnungen eines im Bedarfsfalle unter der Verschlussplatte angeordneten Lautsprechers dienen können.

Im folgenden wird die Erfindung an Hand zweier auf der Zeichnung dargestellter Ausführungsbeispiele näher erläutert. Es zeigen:

Fig. 1    eine Ansicht des unteren Teiles eines Kabinentableaus,
Fig. 2    einen Schnitt des Kabinentableaus gemäss der Linie A-A der Fig. 1,
Fig. 3    einen Schnitt des Kabinentableaus gemäss der Linie B-B der Fig. 1,
Fig. 4    einen Schnitt des Kabinentableaus gemäss der Linie C-C der Fig. 1 in vergrössertem Maßstab,
Fig. 5    einen Schnitt einer Montageplattenhalterung des Kabinentableaus gemäss der Linie A-A der Fig. 1 in vergrössertem Maßstab,
Fig. 6    einen Schnitt der Montageplattenhalterung gemäss der Linie D-D der Fig. 5 in vergrössertem Maßstab,
Fig. 7    eine Ansicht eines Stockwerktableaus,
Fig. 8    einen Schnitt des Stockwerktableaus gemäss der Linie E-E der Fig. 7 in vergrössertem Maßstab,
Fig. 9a    einen Schnitt des Stockwerktableaus gemäss der Linie F-F der Fig. 7 in vergrössertem Maßstab,
Fig. 9b    einen Schnitt des Stockwerktableaus gemäss der Linie G-G der Fig. 7 in vergrössertem Maßstab, mit einer Variante der Tableaubefestigung, und
Fig. 10    einen Schnitt des Stockwerktableaus gemäss der Linie H-H der Fig. 7 in vergrössertem Maßstab, mit der Tableaubefestigung gemäss Fig. 9b.

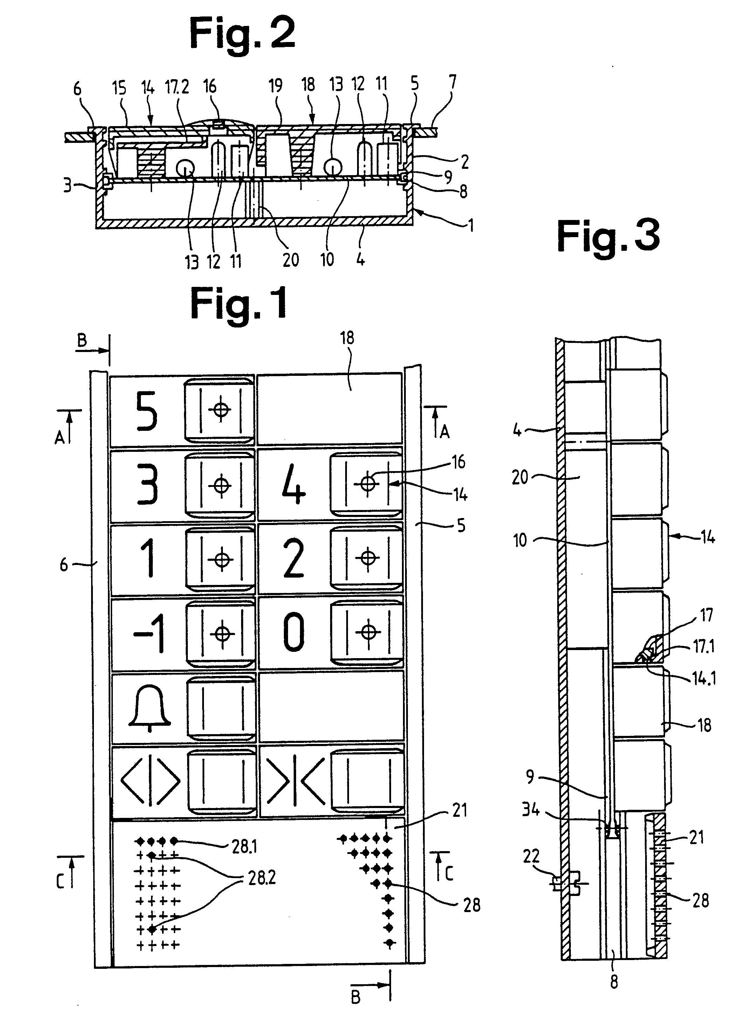

In den Fig. 1 bis 4 ist mit 1 ein Gehäuse bezeichnet, das beispielsweise aus einem U-Profil hergestellt ist, welches zwei in Längsrichtung des Kabinentableaus verlaufende Seitenwände 2, 3 und die Rückwand 4 des Gehäuses 1 bildet. An der Frontseite des Kabinentableaus ist das Gehäuse 1 offen, wobei die frontseitigen Ränder der Seitenwände 2, 3 mit Flanschen 5, 6 versehen sind, mit welchen das Gehäuse 1 auf einer Wand 7 einer Aufzugskabine aufliegt. An den Innenseiten der Seitenwände 2, 3 sind Nuten 8 vorgesehen, in welche Führungen 9 verschiebbar eingesetzt sind. Mit 10 sind Montageplatten, beispielsweise in Form von gedruckten Schaltungen, bezeichnet, die an ihren Rändern in den Führungen 9 gehalten werden. Auf den Montageplatten 10 sind Schalter 11 für die Eingabe von Steuerbefehlen und Anzeigelampen 12 für die Anzeige gespeicherter Steuerbefehle befestigt, wobei die Steuerbefehle beispielsweise Kabinenrufe und Türöffnungs- oder Türschliessbefehle sein können, und wobei jeweils den Schaltern 11 für die Eingabe von Kabinenrufen Anzeigelampen 12 zugeordnet sind. Als Schalter 11 und Anzeigelampen 12 sind vorzugsweise Mikroschalter und Leuchtdioden vorgesehen. Weitere, auf den Montageplatten 10 befestigte Bauelemente, beispielsweise Widerstände und Dioden, sind mit 13 bezeichnet. Die Schalter 11 und gegebenenfalls die zugehörigen Anzeigelampen 12 sowie die weiteren Bauelemente 13 sind mittels gleich grosser Abdeckhauben 14 abgedeckt, die aneinandergefügt auf den Montageplatten 10 angeordnet sind, wobei in Frontwänden 15 der jeweils betreffenden Abdeckhauben 14, Linsen 16 für die Anzeigelampen 12 eingesetzt sind. Die Abdeckhauben 14 sind drehbar an auf den Montageplatten 10 befestigten Trägern 17 gelagert und bilden in dieser Weise Betätigungsglieder der Schalter 11 in Form von Drucktasten. Hierbei sind in den vorzugsweise aus einem elastischen Kunststoff bestehenden Abdeckhauben 14 Löcher 14.1 vorgesehen, in welche Lagerzapfen 17.1 eingreifen, die an den ebenfalls aus einem elastischen Kunststoff bestehenden Trägern 17 federnd angebracht sind. Ein Teil des Trägers 17 ist als Rückstellfeder 17.2 ausgebildet, die bei Benutzung der Abdeckhaube 14 als Drucktaste die Rückstellbewegung des Schalters 11 unterstützt.

Weitere, gleich grosse Abdeckhauben 18 sind fest mit den Montageplatten 10 verschraubt. Mit den weiteren Abdeckhauben 18 werden Schalter 11, Anzeigelampen 12 und weitere Bauelemente 13 ohne Funktion abgedeckt, die für einen späteren Ausbau der Aufzugsanlage vorgesehen sind. Die Nuten 8 sind derart an den Innenseiten der Seitenwände 2, 3 angeordnet, dass die Frontwände 15 der Abdeckhauben 14 und Frontwände 19 der weiteren Abdeckhauben 18 mit den frontseitigen Flanschen 5, 6 des Gehäuses 1 bündig sind und eine geschlossene Front des Kabinentableaus bilden.

Die Montageplatten 10 sind so bemessen, dass sie von der Frontseite des Kabinentableaus aus in die Führungen 9 eingesetzt werden können. Gemäss den Fig. 1 bis 3 sind mehrere Schalter 11, Anzeigelampen 12 und Bauelemente 13 für eine entsprechende Anzahl Steuerbefehle in zwei Reihen auf einer einzigen Montageplatte 10 angeordnet. Die Montageplatte 10 stützt sich hierbei über eine Abstützung 20 auf der Rückwand 4 des Gehäuses 1 ab. Es ist natürlich auch möglich, die Schalter 11, Anzeigelampen 12 und Bauelemente 13 nur in einer Reihe anzuordnen, wobei die Abstützung 20 nicht erforderlich wäre. Es kann jedoch auch zweckmässig sein, mehrere Montageplatten 10 zu verwenden, die jeweils nur mit Bauteilen 11, 12, 13 für einen Steuerbefehl bestückt sind.

Mit 21 ist eine Verschlussplatte bezeichnet, die der Abdeckung der Tableaubefestigungselemente, beispielsweise in Form von Schrauben 22, dient und die derart am Gehäuse 1 angeordnet ist, dass sie nicht ohne weiteres von unbefugten Personen entfernt werden kann. An der Verschlussplatte 21 sind Führungsnuten 21.1 vorgesehen, in welchen ein unter der Einwirkung einer Feder 23 stehender Riegel 24 verschiebbar geführt ist. An den Innenseiten der Seitenwände 2, 3 des Gehäuses 1 sind Nuten 25 vorgesehen, in welche an der Verschlussplatte 21 und am Riegel 24 angebrachte Vorsprünge 26, 27 beim Aufsetzen der Verschlussplatte 21 einrasten. Die Nuten 25 sind derart angeordnet, dass die Verschlussplatte 21 mit den frontseitigen Flanschen 5, 6 des Gehäuses 1 bündig ist. In der Verschlussplatte 21 sind eine Anzahl gleich grosser, siebartig angeordneter Löcher 28 vorgesehen, die als Schallaustrittsöffnungen eines im Bedarfsfalle unter der Verschlussplatte 21 angeordneten Lautsprechers dienen, und von denen einige im Bereiche des Riegels 24 beispielsweise als Sacklöcher 28.1 ausgebildet sind. Der Riegel 24 weist zwei mit Abschrägungen 30 versehene Öffnungen 29 auf, die mit zwei der Löcher 28 korrespondieren, welche als Schlüsselöffnungen 28.2 dienen. Mit 31 ist ein Gabelzinken eines gabelartig ausgebildeten Schlüssels bezeichnet, der eine Abschrägung 32 aufweist, die beim Entfernen der Verschlussplatte 21 mit der Abschrägung 30 der Öffnung 29 zusammenwirkt.

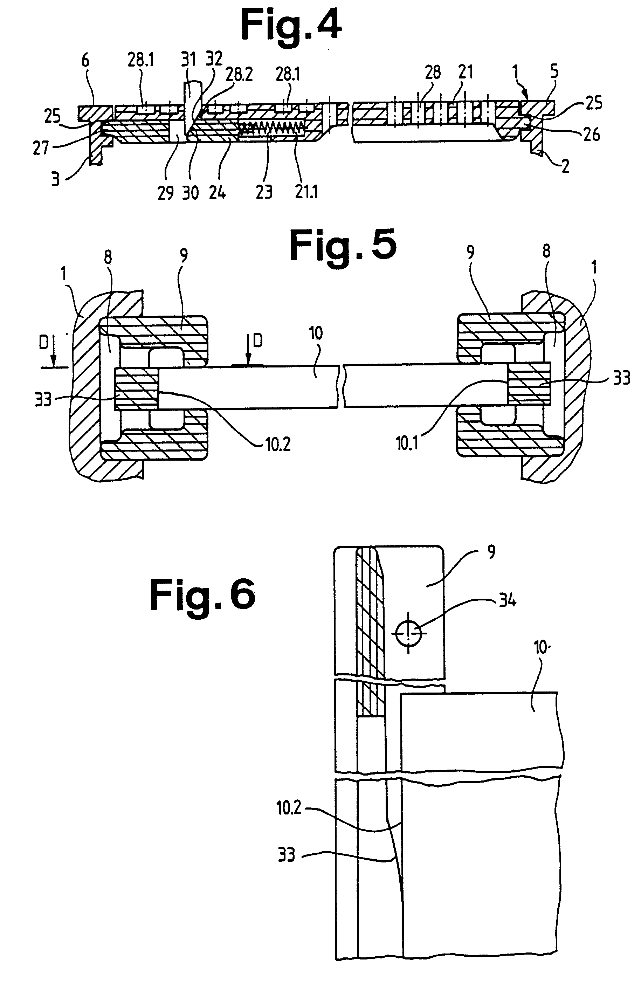

Gemäss Fig. 5 und 6 weisen die vorzugsweise aus einem elastischen Kunststoff bestehenden Führungen 9 einen C-profilartigen Querschnitt auf, der so bemessen ist, dass die Ränder der Montageplatten 10 zangenartig federnd umfasst werden. An den Führungen 9 sind federnde Nocken 33 vorgesehen, die auf Stirnseiten 10.1, 10.2 der Montageplatte 10 drücken. Auf diese Weise können die Montageplatten 10 trotz möglicherweise auftretender Fabrikationstoleranzen sowohl in Richtung der Frontseite des Tableaus als auch quer dazu form- und kraftschlüssig gehalten werden. An den Enden der Führungen 9 sind Löcher 34 vorgesehen, die zur Aufnahme eines Werkzeuges zwecks Verschiebung der Führungen 9 in den Nuten 8 bestimmt sind. Nach Entfernung der Verschlussplatte 21 und Verschiebung mindestens einer Führung 9 können daher die Montageplatten 10 von der Frontseite des Tableaus aus eingesetzt oder herausgenommen werden.

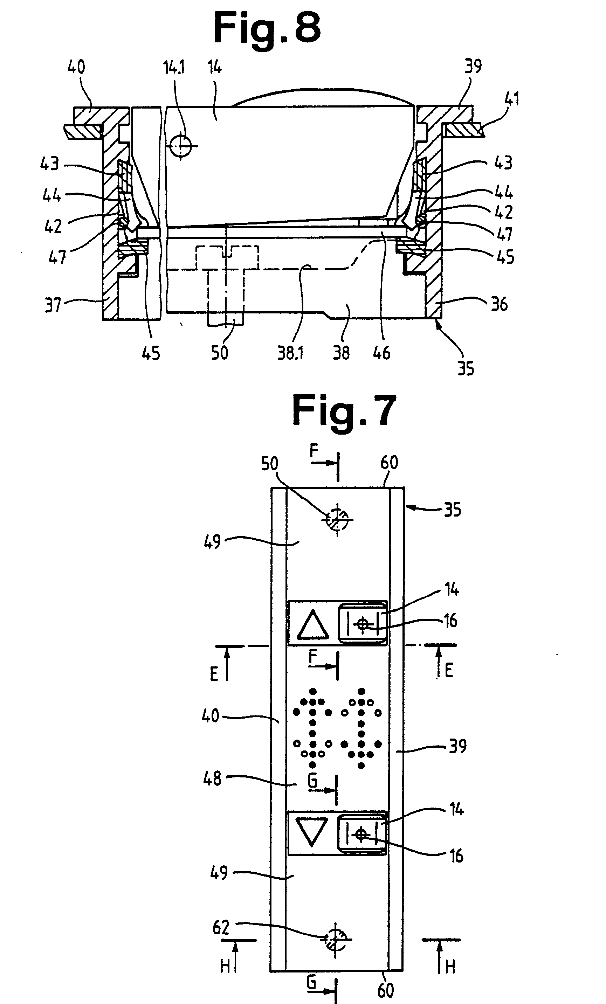

In den Fig. 7 bis 10 ist mit 35 ein Gehäuse bezeichnet, das aus zwei in Längsrichtung des Stockwerktableaus verlaufende, Seitenwände 36, 37 bildende Profilschienen besteht, die an ihren Enden mittels winkelförmiger Endstücke 38 miteinander verbunden sind, deren parallel zur Frontseite des Stockwerktableaus verlaufende Schenkel Befestigungsflansche 38.1 des Stockwerktableaus bilden. Die Verbindung der winkelförmigen Endstücke 38 mit den Seitenwänden 36, 37 kann beispielsweise derart sein, dass Ansätze 38.2 der winkelförmigen Endstücke 38 durch entsprechend geformte Löcher der Seitenwände 36, 37 hindurch ragen und verstemmt werden. An den Seitenwänden 36, 37 sind frontseitig Flansche 39, 40 vorgesehen, mit welchen das Gehäuse 35 auf einer Wand oder einem Stockwerktürpfosten 41 (Fig. 8) aufliegt. An den Innenseiten der Seitenwände 36, 37 sind Nuten 42 angeordnet, in welche Führungen 43 eingesetzt sind. Die Führungen 43 bestehen vorzugsweise aus einem elastischen Kunststoff und weisen federnde Rasthebel 44 und eine Auflageleiste 45 auf. Beim Einsetzen einer Montageplatte 46 von der Frontseite des Tableaus aus, rasten deren Ränder in die Führungen 43 ein und werden zwischen den Rasthebeln 44 und den Auflageleisten 45 form- und kraftschlüssig gehalten. Zwischen den

Rasthebeln 44 und den Innenseiten der Seitenwände 36, 37 sind in Längsrichtung des Tableaus verlaufende und verschiebbare Verriegelungsstangen 47 vorgesehen, mittels welchen die Rasthebel 44 bei Bedarf blockierbar sind, so dass die Montageplatte 46 nicht entfernt werden kann. Die Montageplatte 46 trägt die Schalter 11, Anzeigelampen 12 und weiteren Bauelemente 13 (Fig. 1 bis 3) sowie die entsprechenden, als Drucktasten dienenden Abdeckhauben 14 für die Steuerbefehle "AUF" und "AB". Ausserdem sind noch weitere, nicht dargestellte Anzeigelampen und Bauelemente für die Weiterfahrtsignalisation vorgesehen und mittels einer weiteren Abdeckhaube 48 abgedeckt. Die Nuten 43 sind derart angeordnet, dass die Frontwände der Abdeckhauben 14, 48 mit den frontseitigen Flanschen 39, 40 des Gehäuses 35 bündig sind und eine geschlossene Front des Stockwerktableaus bilden.

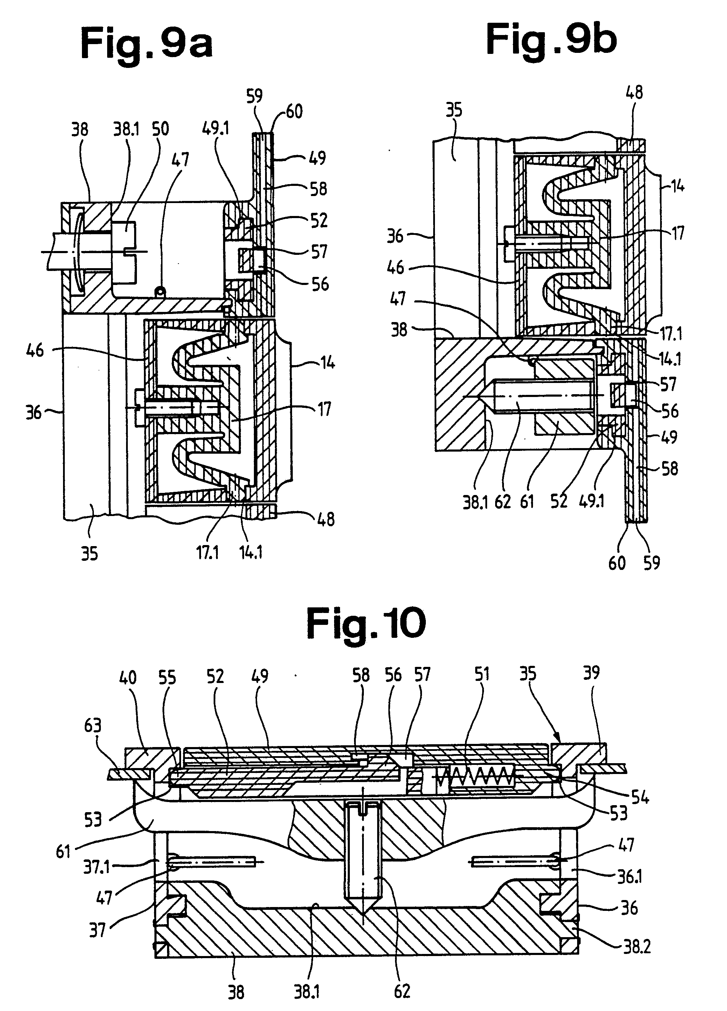

Mit 49 sind Verschlussplatten bezeichnet, die ähnlich der Verschlussplatte 21 gemäss den Fig. 1, 3, 4 der Abdeckung der Tableaubefestigungselemente, beispielsweise in Form von Schrauben 50, dienen. Auch die Verschlussplatten 49 sind derart am Gehäuse 35 angeordnet, dass sie nicht ohne weiteres von unbefugten Personen entfernt werden können. An den Verschlussplatten 49 sind Führungsnuten 49.1 vorgesehen, in welchen ein unter der Einwirkung einer Feder 51 stehender Riegel 52 verschiebbar geführt ist. An den Innenseiten der Seitenwände 36, 37 des Gehäuses 35 sind Nuten 53 vorgesehen, in welche an der Verschlussplatte 49 und am Riegel 52 angebrachte Vorsprünge 54, 55 beim Aufsetzen der Verschlussplatte 49 einrasten. Die Nuten 53 sind derart angeordnet, dass die Verschlussplatten 49 mit den frontseitigen Flanschen 39, 40 des Gehäuses 35 bündig sind. Der Riegel 52 weist einen Ansatz 56 auf, der in eine Ausnehmung 57 der Verschlussplatte 49 hineinragt. In der Verschlussplatte 49 ist ein parallel zu ihrer Frontseite verlaufender Kanal 58 rechteckigen Querschnittes vorgesehen, dessen eine Öffnung 59 sich in einer, einen horizontalen Rand des Tableaus bildenden Schmalseite 60 der Verschlussplatte 49 befindet und der mit der Ausnehmung 57 in Verbindung steht. Der Kanal 58 ist zur Aufnahme eines nicht dargestellten Schlüssels in Form eines Streifens gleichen rechteckigen Querschnittes bestimmt, wobei die eine Öffnung 59 als Schlüsselöffnung dient. Der Schlüssel weist an seinem einen Ende eine Abschrägung auf, die mit einer am Ansatz 56 des Riegels 52 vorgesehenen Abschrägung beim Entfernen der Verschlussplatten 49 zusammenwirkt. Nach der Entfernung der Verschlussplatten 49 und gegebenenfalls Verschiebung der Verriegelungsstangen 47 kann die Montageplatte 46 von der Frontseite des Tableaus aus eingesetzt oder herausgenommen werden. Gemäss den Fig. 9b und 10 ist hinter der Verschlussplatte 49 ein Befestigungsbügel 61 angeordnet, der sich einerseits über eine Schraube 62 auf dem Befestigungsflansch 38.1 und andererseits über seine beiden, durch Aussparungen 36.1, 37.1 der Seitenwände 36, 37 hindurchragenden Enden auf der Rückseite einer das Tableau tragenden Wand 63 abstützt, wobei die Wand 63 zwischen den auf ihrer Vorderseite aufliegenden frontseitigen Flanschen 39, 40 des Gehäuses 35 und dem Befestigungsbügel 61 eingeklemmt ist.

Anstelle eines Teiles der siebartig angeordneten Löcher 28 kann die Verschlussplatte 21 mit einer Öffnung versehen werden, in die eine Abdeckung gleicher Abmessung eingesetzt wird, welche je nach Anwendungsfall passende Durchbrüche für weitere Anzeige- und Bedienungselemente aufweist.

Es ist auch möglich, anstelle des Ansatzes 56 im Riegel 52 der Verschlussplatte 49 einen Durchbruch vorzusehen, der eine schräge Begrenzungskante aufweist. Der Schlüssel ist hierbei ein Draht mit einer rechtwinkligen Abbiegung, deren Länge der Breite des Kanals 58 entspricht. Nach dem Einführen und Verdrehen des Schlüssels greift die Abbiegung in den Durchbruch ein und gleitet beim Ziehen am Schlüssel an der schrägen Begrenzungskante entlang, wobei die Verschlussplatte 49 entriegelt wird.

**Patentansprüche**

1. Tableau für Aufzüge, mit einem Gehäuse (1 bzw. 35), in welchem Schalter (11) und Anzeigelampen (12) für die Eingabe von Steuerbefehlen bzw. für die Anzeige gespeicherter Steuerbefehle angeordnet sind, wobei Befestigungselemente für die Befestigung des Tableaus in einer Aufzugskabine oder auf einem Stockwerk vorgesehen sind,
dadurch gekennzeichnet,
- dass Verschlussplatten (21 bzw. 49) vorgesehen sind, welche die Befestigungselemente verdecken und welche Führungsnuten (21.1 bzw. 49.1) aufweisen, in denen ein unter der Einwirkung einer Feder (23 bzw. 51) stehender Riegel (24 bzw. 52) verschiebbar geführt ist,
- wobei am Gehäuse (1 bzw. 35) Nuten (25 bzw. 53) vorgesehen sind, in welche die Verschlussplatten (21 bzw. 49) beim Aufsetzen einrasten, und wobei die Nuten (25 bzw. 53) derart angeordnet sind, dass die Verschlussplatten (21 bzw. 49) mit frontseitigen Flanschen (5, 6 bzw. 39, 40) des Gehäuses (1 bzw. 35) bündig sind, und
- dass die Verschlussplatten (21 bzw. 49) mindestens eine getarnte Schlüsselöffnung (28.2 bzw. 59) aufweisen, so dass sie nur unter Anwendung eines der Schlüsselöffnung (28.2 bzw. 59) angepassten, auf den Riegel (24 bzw. 52) einwirkenden Schlüssels wieder entfernt werden können.

2. Tableau für Aufzüge, nach Patentanspruch 1, _dadurch gekennzeichnet,_ dass in der Verschlussplatte (21) eine Anzahl gleich grosser, siebartig angeordneten Löcher (28) vorgesehen sind, von denen zwei als Schlüsselöffnungen (28.2) dienen, welche mit Abschrägungen (30) aufweisende Öffnungen (29) des Riegels (24) korrespondieren, wobei der Schlüssel gabelartig ausgebildet ist und die Gabelzinken (31) des Schlüssels Abschrägungen (32) aufweisen, die mit den Abschrägungen (30) der Öffnungen (29) des Riegels (24) beim Entfernen der Verschlussplatte (21) zusammenwirken.

3. Tableau für Aufzüge, nach Patentanspruch 1, _dadurch gekennzeichnet,_ dass die Verschlussplatte (49) einen parallel zu ihrer Frontseite verlaufenden Kanal (58) rechteckigen Querschnittes aufweist, dessen eine Öffnung (59) sich in einer, einen horizontalen Rand des Tableaus bildenden Schmalseite (60) der Verschlussplatte (49) befindet und die als Schlüsselöffnung dient, und dass in der Verschlussplatte (49) eine Ausnehmung (57) vorgesehen ist, die mit dem Kanal (58) in Verbindung steht und in welche ein Ansatz (56) des Riegels (52) hineinragt,

- wobei der Kanal (58) zur Aufnahme des Schlüssels in Form eines Streifens gleichen rechteckigen Querschnittes bestimmt ist, und

- wobei der Schlüssel an einem Ende eine Abschrägung aufweist, die mit einer am Ansatz (56) des Riegels (52) vorgesehenen Abschrägung beim Entfernen der Verschlussplatte (49) zusammenwirkt.

4. Tableau für Aufzüge, nach Patentanspruch 1, _dadurch gekennzeichnet,_ dass das Gehäuse (35) aus zwei in Längsrichtung des Tableaus verlaufenden, Seitenwände (36, 37) bildenden Profilschienen besteht, die an ihren Enden mittels winkelförmiger Endstücke (38) miteinander verbunden sind, deren parallel zur Frontseite des Tableaus verlaufende Schenkel Befestigungsflansche (38.1) des Tableaus bilden.

5. Tableau für Aufzüge, nach Patentanspruch 4, _dadurch gekennzeichnet,_ dass hinter der Verschlussplatte (49) ein Befestigungsbügel (61) angeordnet ist, der sich einerseits über eine Schraube (62) auf dem Befestigungsflansch (38.1) und andererseits über seine beiden Enden auf der Rückseite einer das Tableau tragenden Wand (63) abstützt, wobei die Wand (63) zwischen den auf ihrer Vorderseite aufliegenden frontseitigen Flanschen (39, 40) des Gehäuses (35) und dem Befestigungsbügel (61) eingeklemmt ist.

## Claims

1. Panel for lifts, with a housing (1 or 35), in which switches (11) and indicator lamps (12) are provided respectively for the input of control commands and for the indication of stored control commands, wherein fastening elements for the fastening of the panel in a lift cage or on a storey are provided, characterised thereby,

- that closure plates (21 or 49) are provided, which conceal the fastening elements and display guide grooves (21.1 or 49.1), in which a locking bar (24 or 52) standing under the effect of a spring (23 or 51) is displaceably guided,

- wherein grooves (25 or 53), into which the closure plates (21 or 49) detent when being put on, are provided at the housing (1 or 35) and wherein the grooves (25 or 53) are arranged in such a manner that the closure plates (21 or 49) are flush with frontal flanges (5, 6 or 39, 40) of the housing (1 or 35), and

- that the closure plates (21 or 49) display at least one camouflaged keyhole (28.2 or 59) so that they can be removed again only with the use of a key matched to the keyhole (28.2 or 59) and acting on the locking bar (24 or 52).

2. Panel for lifts according to claim 1, characterised thereby, that a number of equally large holes (28) are arranged in the closure plate (21), which are arranged in the manner of a sieve and of which two serve as keyholes (28.2), which correspond with openings (29), which display bevels (30), of the locking bar (24), wherein the key is constructed in the manner of a fork and the fork tines of the key display bevels (32), which cooperate with the bevels (30) of the openings (29) of the locking bar (24) during the removal of the closure plate (21).

3. Panel for lifts according to claim 1, characterised thereby,

- that the closure plate (49) displays a channel (58), which is of rectangular cross-section and extends parallelly to its front side and the one opening (59) of which is disposed in a narrow side (60), forming a horizontal edge of the panel, of the closure plate (49) and serves as keyhole, and

- that a recess (57), which stands in communication with the channel (58) and into which protrudes a projection (56) of the locking bar (52), is provided in the closure plate (49),

- wherein the channel (58) is intended for the reception of the key in the shape of a strip of like rectangular cross-section and

- wherein the key at one end displays a bevel which during the removal of the closure plate (49) co-operates with the bevel provided at the projection (56) of the locking bar (52).

4. Panel for lifts according to claim 1, characterised thereby, that the housing (35) consists of two profile rails which extend in longitudinal direction of the panel, form side walls (36, 37) and are connected together at their ends by means of bracket-shaped end pieces (38), the limbs of which extending parallelly to the front side of the panel form fastening flanges (38.1) of the panel.

5. Panel for lifts according to claim 4, characterised thereby, that a fastening bracket (61), which bears on the one hand by way of a screw (62) on the fastening flange (38.1) and on the other hand by way of both its ends on the rear side of a wall (63) bearing the panel, is arranged behind the closure plate (49), wherein the wall (63) is clamped in between the fastening bracket (61) and the frontal flanges (39, 40) of the housing (35), which rest on its front side.

**Revendications**

1. Tableau de commande pour ascenseur comportant un boîtier (1 ou 35) dans lequel sont disposés des interrupteurs (11) et des lampes témoin (12) pour l'introduction d'ordres de commande respectivement la signalisation d'ordres de commande mémorisés, des éléments de fixation étant prévus pour la fixation du tableau de commande dans une cabine d'ascenseur ou à un étage, <u>caractérisé</u>:
   - en ce que sont prévues des plaques d'obturation (21 ou 49) qui masquent les éléments de fixation et présentent des rainures de guidage (21.1 ou 49.1) dans lesquelles est guidé coulissant un verrou (24 ou 52) placé sous l'influence d'un ressort (23 ou 51),
   - des rainures (25 ou 53) étant prévues sur le boîtier (1 ou 35) dans lesquelles les plaques d'obturation (21 ou 49) s'engagent lors du montage, et les rainures (25 ou 53) étant disposées de telle manière que les plaques d'obturation (21 ou 49) affleurent les rebords frontaux (5, 6 ou 39, 40) du boîtier (1 ou 35), et
   - en ce que les plaques d'obturation (21 ou 49) comportent au moins une entrée de clef dissimulée (28.2 ou 59), de sorte qu'elles peuvent être retirées seulement par l'utilisation d'une clef adaptée à l'entrée de clef (28.2 ou 59) et agissant sur le verrou (24 ou 52).

2. Tableau de commande pour ascenseur selon la revendication 1, <u>caractérisé</u> en ce que dans la plaque d'obturation (21) il est prévu une pluralité de trous (28) d'égale grosseur disposés à la façon d'un tamis, dont deux desquels servent en tant qu'entrées de clef (28.2) correspondant à des ouvertures (29) du verrou (24) présentant des chanfreins (30), la clef étant réalisée en forme de fourchette et les dents de fourchette (31) de la clef présentant des chanfreins (32) qui, lors de l'enlèvement de la plaque d'obturation (21), coopèrent avec les chanfreins (30) des ouvertures (29) du verrou (24).

3. Tableau de commande pour ascenseur selon la revendication 1, <u>caractérisé</u>:
   - en ce que la plaque d'obturation (49) présente un conduit (58) de section transversale rectangulaire s'étendant parallèlement à son côté frontal, dont une ouverture (59) se trouve sur un côté étroit (60) de la plaque d'obturation (49) formant un bord horizontal du tableau et sert en tant qu'entrée de clef, et

   - en ce que dans la plaque d'obturation (49) est prévu un évidement (57) qui est en liaison avec le conduit (58) et dans lequel fait saillie un épaulement (56) du verrou (52),
   - le conduit (58) étant destiné à la réception de la clef en forme de lame de même section transversale rectangulaire, et
   - la clef présentant, à une extrémité, un chanfrein qui, lors de l'enlèvement de la plaque d'obturation (49), coopère avec un chanfrein prévu sur l'épaulement (56) du verrou (52).

4. Tableau de commande pour ascenseur selon la revendication 1, <u>caractérisé</u> en ce que le boîtier (35) consiste en deux rails profilés s'étendant dans la direction longitudinale du tableau, lesquels forment des parois latérales (36, 37) et sont reliés ensemble à leurs extrémités au moyen de pièces d'extrémité (38) en forme d'équerre dont les ailes qui s'étendent parallèlement au côté frontal du tableau forment des rebords de fixation (38.1) du tableau.

5. Tableau de commande pour ascenseur selon la revendication 4, <u>caractérisé</u> en ce que derrière la plaque d'obturation (49) est disposé un étrier de fixation (61) qui, d'une part, s'appuie au rebord de fixation (38.1) par l'intermédiaire d'une vis (62) et, d'autre part, s'appuie par ses deux extrémités au dos d'une paroi (63) supportant le tableau, la paroi (63) étant coincée entre les rebords frontaux (39, 40) du boîtier (35) qui reposent sur sa face avant et l'étrier de fixation (61).

# Fig. 2

# Fig. 3

# Fig. 1

# Fig.4

# Fig.5

# Fig.6

# Fig. 8

# Fig. 7

# Fig.9a

# Fig.9b

# Fig.10